# EUROPEAN PATENT APPLICATION

(11) **EP 4 451 387 A1**
(43) Date of publication of application: **23.10.2024**
(21) Application number: 23831912.3
(22) Date of filing: 28.06.2023
(51) Int. Cl.: H01M 4/525, H01M 4/505, H01M 4/36, H01M 4/131, H01M 10/0525, H01M 4/02

(54) **CATHODE ACTIVE MATERIAL, PREPARATION METHOD THEREFOR, AND CATHODE AND LITHIUM SECONDARY BATTERY, WHICH COMPRISE SAME**

(30) Priority: 30.06.2022 KR 20220080870
(71) Applicant: LG Chem, Ltd., Yeongdeungpo-gu Seoul 07336 (KR)
(72) Inventor: JEONG, Jin Hoo, Daejeon 34122 (KR); JEONG, Myung Gi, Daejeon 34122 (KR); JU, Jin Wook, Daejeon 34122 (KR); WOO, Sang Won, Daejeon 34122 (KR); HWANG, Joo Kyoung, Daejeon 34122 (KR); JUNG, Jin Hee, Daejeon 34122 (KR); GU, Ye Hyeon, Daejeon 34122 (KR)
(74) Representative: Hoffmann Eitle
(86) International application number: PCT/KR2023/009069
(87) International publication number: WO 2024/005553

(57) **Abstract**

The present invention relates to: a positive electrode active material in the form of a single particle, wherein the positive electrode active material includes a lithium composite transition metal oxide in the form of a single particle, and the lithium composite transition metal oxide includes Al, Y, and Zr; a method for preparing the positive electrode active material; and a positive electrode and a lithium secondary battery including the same.

## Description

### TECHNICAL FIELD

### CROSS-REFERENCE TO RELATED APPLICATIONS

The present application claims the benefit of the priority of Korean Patent Application No. 10-2022-0080870, filed on June 30, 2022, the disclosure of which is incorporated herein in its entirety by reference.

### TECHNICAL FIELD

The present invention relates to a positive electrode active material including a lithium composite transition metal oxide in the form of a single particle, a method for preparing the same, and a positive electrode and a lithium secondary battery including the same.

### BACKGROUND ART

Recently, in order to solve the structural and thermal stability limitations of a positive electrode material itself in the form of a secondary particle, the development of a positive electrode material in the form of a single particle has been accelerated. Specifically, when the positive electrode material in the form of a secondary particle is applied to a lithium secondary battery, there is a limitation that a large amount of gas is generated and the volume of the battery is expanded, and when the nickel content in the positive electrode material is increased for high capacity, there is a limitation that the risk of fire is also increased, and accordingly, there is an increasing demand for the development of a positive electrode material in the form of a single particle. However, the positive electrode material in the form of a single particle has a limitation in that the resistance characteristics are poor due to a low specific surface area.

Therefore, it is necessary to develop a positive electrode material in the form of a single particle, the positive electrode material having excellent stability and being capable of improving initial efficiency, resistance characteristics, and the like of a battery when applied to the battery.

### DISCLOSURE OF THE INVENTION

### TECHNICAL PROBLEM

To solve the above-described limitations, an aspect of the present invention provides a positive electrode active material including a lithium composite transition metal oxide in the form of a single particle, the positive electrode active material having excellent structural stability and being capable of improving initial efficiency, resistance characteristics, and the like of a battery when applied to the battery.

In addition, another aspect of the present invention provides a method for preparing the positive electrode active material.

In addition, still another aspect of the present invention provides a lithium secondary battery having improved initial efficiency, resistance characteristics, and the like.

### TECHNICAL SOLUTION

In order to solve the above problem, the present invention provides a positive electrode active material, a method for preparing a positive electrode active material, a positive electrode, and a lithium secondary battery.
(1) According to an aspect of the present invention, there is provided a positive electrode active material including a lithium composite transition metal oxide in the form of a single particle, wherein the lithium composite transition metal oxide includes Al, Y, and Zr.
(2) In (1) above of the present invention, there is provided the positive electrode active material, wherein the lithium composite transition metal oxide has an average particle diameter (D₅₀) of 2.5 um to 5.5 µm.
(3) In (1) or (2) above of the present invention, there is provided the positive electrode active material, wherein the Al is included in an amount of 500 ppm to 3,000 ppm with respect to a total weight of the lithium composite transition metal oxide.
(4) In any one of (1) to (3) above of the present invention, there is provided the positive electrode active material, wherein the Y is included in an amount of 100 ppm to 2,000 ppm with respect to a total weight of the lithium composite transition metal oxide.
(5) In any one of (1) to (4) above of the present invention, there is provided the positive electrode active material, wherein the Zr is included in an amount of 500 ppm to 5,000 ppm with respect to a total weight of the lithium composite transition metal oxide.
(6) In any one of (1) to (5) above of the present invention, there is provided the positive electrode active material, wherein the lithium composite transition oxide metal contains 60 mol% or more of nickel with respect to the total number of moles of metals other than lithium.
(7) In any one of (1) to (6) above of the present invention, there is provided the positive electrode active material, wherein the lithium composite transition metal oxide has a composition represented by Formula 1 below:

   [Formula 1] Liₓ[NiₐCo_{b}Mn_{c}Al_{d}YₑZr_{f}M1_{g}]O_{2-y}A_{y}

   wherein, in Formula 1 above,
   M1 is at least one selected from among B, Ti, W, Nb, Sr, Mo, Mg, P, V, Ta, Ga, and Ca,
   A is at least one selected from among F, Cl, Br, I, and S, and
   0.9≤x≤1.2, 0.6≤a<1, 0≤b≤0.4, 0≤c≤0.4, 0<d≤0.01, 0<e≤0.0006, 0<f≤0.005, 0≤g≤0.2, a+b+c+d+e+f+g=1, and 0≤y≤0.2.
(8) In any one of (1) to (7) above of the present invention, there is provided the positive electrode active material, further including a coating part containing Co formed on the lithium composite transition metal oxide in the form of a single particle.
(9) In (8) above of the present invention, there is provided the positive electrode active material, wherein the coating part further includes Al, Zr, or a combination thereof.
(10) According to another aspect of the present invention, there is provided a method for preparing the positive electrode active material, the method including the steps of: (A) mixing a positive electrode active material precursor including a composite transition metal hydroxide, a composite transition metal oxyhydroxide, or a combination thereof, a first lithium-containing raw material, an aluminum-containing raw material, an yttrium-containing raw material, and a zirconium-containing raw material to prepare a mixture; (B) primarily sintering the mixture at 820 °C to 950 °C to prepare a primarily sintered product; and (C) mixing the primarily sintered product with optionally a second lithium-containing raw material, and then secondarily sintering the mixture at 700 °C to 850 °C to prepare a secondarily sintered product.
(11) In (10) above of the present invention, there is provided the method further including a step of (B') pulverizing the primarily sintered product before step (C).
(12) In (10) or (11) above of the present invention, there is provided the method further including a step of (C') pulverizing the secondarily sintered product.
(13) In any one of (10) to (12) above of the present invention, there is provided the method further including a step of (D) mixing the secondarily sintered product with a cobalt-containing coating material, and then performing heat-treatment.
(14) In (13) above of the present invention, there is provided the method, wherein in step (D), when the secondarily sintered product and the cobalt-containing coating material are mixed, an aluminum-containing coating material, a zirconium-containing coating material, or a combination thereof is further mixed.
(15) In (13) or (14) above of the present invention, there is provided the method, wherein the cobalt-containing coating material is mixed in an amount so that the ratio (B/A) of the number of moles (B) of cobalt contained in the cobalt-containing coating material to the total number of moles (A) of metals other than lithium contained in the secondarily sintered product becomes 0.01 to 0.03.
(16) In (14) above of the present invention, there is provided the method, wherein the aluminum-containing coating material is mixed in an amount of 0.03 parts by weight to 0.10 parts by weight with respect to 100 parts by weight of the secondarily sintered product.
(17) In any one of (13) to (16) above of the present invention, there is provided the method, wherein the heat-treatment is performed in an oxygen atmosphere.
(18) In any one of (13) to (17) above of the present invention, there is provided the method, wherein the heat-treatment is performed at 600 °C to 800 °C.
(19) According to still another aspect of the present invention, there is provided a positive electrode including the positive electrode active material according to any one of (1) to (9) above.
(20) According to yet still another aspect of the present invention, there is provided a lithium secondary battery including: the positive electrode according to (19) above; a negative electrode; a separator interposed between the positive electrode and the negative electrode; and an electrolyte.

### ADVANTAGEOUS EFFECTS

The positive electrode active material of the present invention includes a lithium composite transition metal oxide in the form of a single particle, and the lithium composite transition metal oxide includes Al, Y and Zr, thereby making it possible to improve the initial efficiency, resistance characteristics, capacity characteristics, life characteristics, or the like of a lithium secondary battery.

In addition, according to the method for preparing a positive electrode active material of the present invention, the above-described positive electrode active material may be effectively prepared.

### BRIEF DESCRIPTION OF THE DRAWINGS

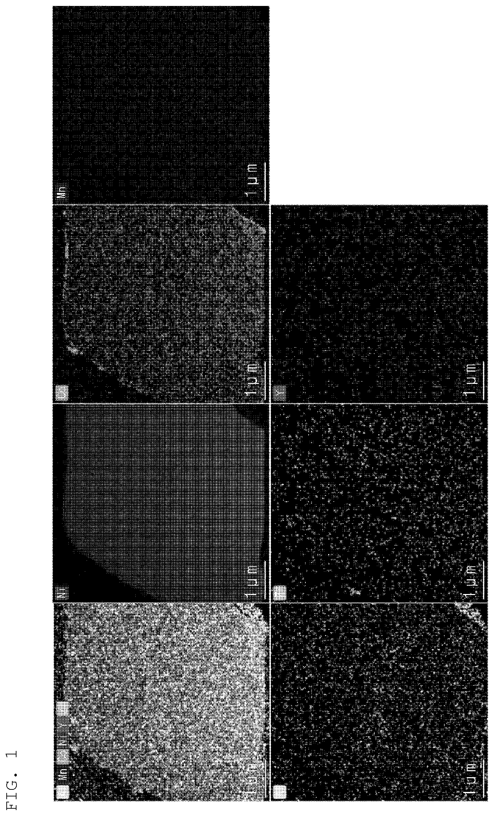

FIG. 1 shows TEM EDX-mapping data of a positive electrode active material of Example 1.

### BEST MODE FOR CARRYING OUT THE INVENTION

Hereinafter, the present invention will be described in more detail to allow for a clearer understanding of the present invention.

It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

It will be understood that the terms "include," "comprise," or "have" when used in the specification, specify the presence of stated features, numbers, steps, elements, or combinations thereof, but do not preclude the presence or addition of one or more other features, numbers, steps, elements, or combinations thereof.

The term "on" in the present invention means not only a case in which one component is formed directly on an upper surface of another component, but also includes a case in which a third component is interposed therebetween.

In the present specification, the term "positive electrode active material in the form of a single particle" is a concept that contrasts with a positive electrode active material in the form of spherical secondary particles formed by aggregation of tens to hundreds of primary particles prepared by a conventional method, and refers to a positive electrode active material composed of at most 10 primary particles. Specifically, in the present invention, the positive electrode active material in the form of a single particle may be a single particle formed of one primary particle or may be a secondary particle formed by aggregation of several primary particles.

The expression "primary particle" denotes the smallest unit of particles recognized when the positive electrode active materials are observed through a scanning electron microscope, and the expression "secondary particle" denotes a secondary structure formed by aggregation of a plurality of the primary particles.

As used herein, the term "average particle diameter (D₅₀)" refers to a particle diameter at 50% of a volume cumulative distribution according to the particle diameter. With respect to the average particle diameter, D₅₀ may be measured by dispersing powder to be measured in a dispersion medium, introducing the powder into a commercially available laser diffraction particle size measuring apparatus (for example, S3500 made by Microtrac, Inc.), measuring a difference in diffraction pattern according to a particle size when the particles pass through a laser beam to calculate a particle size distribution, and calculating a particle diameter at 50% of a volume cumulative distribution according to the particle diameter in the measuring apparatus.

### Positive Electrode Active Material

The present invention provides a positive electrode active material including a lithium composite transition metal oxide in the form of a single particle, wherein the lithium composite transition metal oxide includes Al, Y, and Zr. The lithium composite transition metal oxide may have a layered structure.

The present inventors have found that when the positive electrode active material includes a lithium composite transition metal oxide in the form of a single particle, and the lithium composite transition metal oxide includes Al, Y, and Zr as dopants, the structural stability of the positive electrode active material increases, cation mixing decreases, and grain size is large by 500 nm to 4 µm, thereby improving initial efficiency, resistance characteristics, capacity characteristics, life characteristics, and the like of the lithium secondary battery, and thus have completed the present invention. Specifically, the present inventors have Zr and Al included as dopants for the structural stability of the positive electrode active material in the form of a single particle having a small average particle diameter. There is a limitation that the grain size cannot be increased when Al is included as a dopant, and in order to solve this limitation, Y is included simultaneously, thereby completing the present invention.

According to the present invention, the lithium composite transition metal oxide in the form of a single particle may have an average particle diameter (D₅₀) of 2.5 um to 5.5 um, specifically, 2.5 um, 3.0 um or more, 4.5 um, or 5.5 um or less. When the average particle diameter (D₅₀) of the lithium composite transition metal oxide is within the above range, the electrochemical performance may be optimized. Meanwhile, when the average particle diameter (D₅₀) of the lithium composite transition metal oxide is less than 2.5 µm, there are limitations that the life characteristics of the battery are deteriorated and the amount of gas generated is increased, and when the average particle diameter (D₅₀) is greater than 5.5 µm, there is a limitation that the capacity characteristics and resistance characteristics of the battery are deteriorated.

According to the present invention, the Al may be included in an amount of 500 ppm to 3,000 ppm with respect to a total weight of the lithium composite transition metal oxide. In this case, the internal crystal structure of the positive electrode active material is stabilized, and thus the capacity characteristics and resistance characteristics of the battery may be improved.

According to the present invention, the Y may be included in an amount of 100 ppm to 2,000 ppm with respect to a total weight of the lithium composite transition metal oxide. In this case, the size of grain included in one particle satisfies about 500 nm to about 4 µm, and thus capacity characteristics and life characteristics of the battery may be improved.

According to the present invention, the Zr may be included in an amount of 500 ppm to 5,000 ppm with respect to a total weight of the lithium composite transition metal oxide. In this case, since Zr is stably doped on the lithium layer, the structural stability during intercalation and deintercalation of the lithium is improved, and thus life characteristics and resistance characteristics of the battery may be improved.

According to the present invention, the lithium composite transition metal oxide may include nickel in an amount of 60 mol% or more, specifically, 80 mol% or more, and more specifically, 85 mol% or more, with respect to the total number of moles of metals other than lithium. That is, the lithium composite transition metal oxide may be a high Nibased lithium composite transition metal oxide. In this case, the energy density of the lithium secondary battery may be improved.

According to the present invention, the lithium composite transition metal oxide may have a composition represented by Formula 1 below. In this case, the lithium composite transition metal oxide has a layered structure.

[Formula 1] Liₓ[NiₐCo_{b}Mn_{c}Al_{d}YₑZr_{f}M1_{g}]O_{2-y}A_{y}

In Formula 1 above,
M1 is at least one selected from among B, Ti, W, Nb, Sr, Mo, Mg, P, V, Ta, Ga, and Ca,
A is at least one selected from among F, Cl, Br, I, and S, and
0.9≤x≤1.2, 0.6≤a<1, 0≤b≤0.4, 0≤c≤0.4, 0<d≤0.01, 0<e≤0.0006, 0<f≤0.005, 0≤g≤0.2, a+b+c+d+e+f+g=1, and 0≤y≤0.2.
a above represents an atomic fraction of nickel among the metallic elements in the lithium composite transition metal oxide, wherein a may satisfy 0.6≤a<1, 0.8≤a≤0.98, or 0.85≤a≤0.95.
b above represents an atomic fraction of cobalt among the metallic elements in the lithium composite transition metal oxide, wherein b may satisfy 0≤b≤0.4, 0.01≤b≤0.2, or 0.01≤b≤0.15.
c above represents an atomic fraction of manganese among the metallic elements in the lithium composite transition metal oxide, wherein c may satisfy 0≤c≤0.4, 0.01≤c≤0.2, or 0.01≤c≤0.15.
d above represents an atomic fraction of aluminum among the metallic elements in the lithium composite transition metal oxide, wherein d may satisfy 0<d≤0.01, 0.002≤d≤0.008, or 0.003≤d≤0.006.
e above represents an atomic fraction of yttrium among the metallic elements in the lithium composite transition metal oxide, wherein e may satisfy 0<e≤0.0006, 0.0001≤e≤0.0005, or 0.0002≤e≤0.0003.
f above represents an atomic fraction of zirconium among the metallic elements in the lithium composite transition metal oxide, wherein f may satisfy 0<f≤0.005, 0.001≤f≤0.003, or 0.001≤f≤0.002.
g above represents an atomic fraction of M1 among the metallic elements in the lithium composite transition metal oxide, wherein g may satisfy 0≤g≤0.2, 0≤g≤0.1, or 0≤g≤0.05.

According to the present invention, the positive electrode active material may further include a coating part including Co formed on the lithium composite transition metal oxide in the form of a single particle. The coating part may further include Al, Zr, or a combination thereof. When the positive electrode active material further includes the coating part, the amount of residual lithium by-products may be reduced, the structural stability may be increased to improve life characteristics and resistance characteristics of the battery, and the amount of gas generated may also be reduced. In this case, the coating part may have a thin film shape, may be formed on the entire surface of the lithium composite transition metal oxide, or may be locally formed.

The Co present in the coating part may be included in an amount of 0.5 mol% to 3 mol% with respect to a total number of moles of metals other than lithium contained in the lithium composite transition metal oxide. In this case, the residual lithium by-products may be further reduced, and life and resistance characteristics may be further improved.

The Al present in the coating part may be included in an amount of 300 ppm to 10,000 ppm with respect to a total weight of the lithium composite transition metal oxide. In this case, the structural stability is further increased, and thus the life characteristics, resistance characteristics, and the like may be further improved.

### Method for Preparing Positive Electrode Active Material

The present invention provides a method for preparing the positive electrode active material as described above. That is, the positive electrode active material according to the present invention is prepared by the following method for preparing the positive electrode active material.

The method for preparing the positive electrode active material according to the present invention includes the steps of: (A) mixing a positive electrode active material precursor including a composite transition metal hydroxide, a composite transition metal oxyhydroxide, or a combination thereof, a first lithium-containing raw material, an aluminum-containing raw material, an yttrium-containing raw material, and a zirconium-containing raw material to prepare a mixture; (B) primarily sintering the mixture at 820 °C to 950 °C to prepare a primarily sintered product; and (C) mixing the primarily sintered product with optionally a second lithium-containing raw material, and then secondarily sintering the mixture at 700 °C to 850 °C to prepare a secondarily sintered product.

The aluminum-containing raw material may be at least one selected from among Al(OH)₃, Al₂O₃, AlCl₃, Al(NO)₃, AlSO₄, and Al₂S₃, specifically, at least one selected from among Al(OH)₃, Al₂O₃, and Al(NO)₃, and more specifically, Al(OH)₃. The aluminum-containing raw material may be added in an amount of 500 ppm to 3,000 ppm with respect to the total weight of the positive electrode active material precursor.

The yttrium-containing raw material may be at least one selected from among YCl₃, Y₂O₃, Y(NO₃)₃, Y(OH)₃, YSZ, Y₂(SO4)₃, and Y₂S₃, specifically, at least one selected from among Y₂O₃ and Y(OH)₃, and more specifically, Y₂O₃. The yttrium-containing raw material may be added in an amount of 100 ppm to 2,000 ppm with respect to the total weight of the positive electrode active material precursor.

The zirconium-containing raw material may be at least one selected from among Zr(OH)₄, ZrO₂, Zr(NO₂)₄, ZrCl₄, ZrS₂, Zr(SO4)₂, and C₈H₁₂O₈Zr, specifically, at least one selected from among Zr(OH)₄ and ZrO₂, and more specifically, ZrO₂. The zirconium-containing raw material may be added in an amount of 500 ppm to 5,000 ppm with respect to the total weight of the positive electrode active material precursor.

When the mixture is primarily sintered at 820 °C to 950 °C, primary particles of the positive electrode active material precursor are aggregated to prepare a primarily sintered product in the form of a single particle.

When the primary sintering temperature is within the above range, the primarily sintered product in the form of a single particle that is structurally stable while the primary particles of the positive electrode active material precursor are aggregated is formed, and when the primary sintering temperature is less than 820 °C, there is a limitation that the primary particles are not sufficiently aggregated, and when the primary sintering temperature is greater than 950 °C, there is a limitation that a sintered product that is structurally unstable and has low crystallinity is prepared.

According to the present invention, the primary sintering may be performed in an oxygen atmosphere in order to prevent the lithium transition metal oxide from degenerating into a rock salt structure.

According to the present invention, the primary sintering may be performed for 3 hours to 12 hours, specifically 6 hours to 12 hours, and more specifically 9 hours to 12 hours in order to aggregate the primary particles and improve the crystallinity of the primarily sintered product.

When the primarily sintered product is secondarily sintered at 700 °C to 850 °C, a secondarily sintered product is prepared while lithium is intercalated into the primarily sintered product. In this case, the secondarily sintered product is a lithium composite transition metal oxide in the form of a single particle.

When the secondary sintering temperature is within the above range, there are the advantages that the rock salt structure that may be formed on the surface of the primarily sintered product is restored to the layered structure as lithium is intercalated thereto due to the high temperature during the primary sintering, and lithium by-products are reduced. Meanwhile, when the secondary sintering temperature is less than 700 °C, there is a limitation that the temperature is low and the lithium intercalation speed is slow, and when the temperature is higher than 850 °C, there are limitations that the surface of the primarily sintered product degenerates into a rock salt structure due to the high temperature, and lithium by-products remain.

According to the present invention, the secondary sintering may be performed in an oxygen atmosphere in order to prevent the lithium transition metal oxide from degenerating into a rock salt structure.

According to the present invention, the secondary sintering may be performed for 3 hours to 12 hours, specifically 6 hours to 12 hours, and more specifically 9 hours to 12 hours in order to increase the crystallinity of the internal crystal structure of the positive electrode active material.

The method for preparing the positive electrode active material according to the present invention may further include a step of (B') pulverizing the primarily sintered product before step (C). Step (B') may be a step of pulverizing the primarily sintered product so that the average particle diameter (D₅₀) becomes 2.5 µm to 5.5 pm.

The method for preparing the positive electrode active material according to the present invention may further include a step of (C') pulverizing the secondarily sintered product. Step (C') may be a step of pulverizing the primarily sintered product so that the average particle diameter (D₅₀) becomes 2.5 µm to 5.5 µm.

The pulverization of steps (B') and (C') may be performed by using a pin mill, an ACM, a jet mill, or the like. Meanwhile, the pin mill may be performed under the condition of 18,000 rpm, the ACM may be performed under the conditions of 6,000 rpm for classifying, 12,000rpm for pulverizing by using the equipment from Hosokawa, and the jet mill may be performed under the conditions of 6 bar of a pulverizing pressure and 3,500 rpm for classifying by using the equipment from ZM solution.

The positive electrode active material according to the present invention may be prepared by a process of dividing a lithium-containing raw material into two and injecting the divided raw material, or by a process of injecting the raw material at one time. That is, the lithium-containing raw material may be injected before the primary sintering, or may be separately injected before the primary sintering and before the secondary sintering.

When the lithium-containing raw material is divided into two and injected, the positive electrode active material according to the present invention may be prepared, for example, by primarily sintering the mixture prepared in step (A) at 820 °C to 950 °C to obtain a primarily sintered product, pulverizing the primarily sintered product at room temperature so that the average particle diameter (D₅₀) becomes 2.5 µm to 5.5 µm, then mixing a second lithium-containing raw material with the pulverized primarily sintered product, secondarily sintering the mixture at 700 °C to 850 °C to obtain a secondarily sintered product, and pulverizing the secondarily sintered product at room temperature so that the average particle diameter (D₅₀) becomes 2.5 µm to 5.5 µm. In this case, in step (A), the first lithium-containing raw material may be mixed so that the ratio (M:Li) of the total number of moles (M) of the transition metals contained in the positive electrode active material precursor and the number of moles (Li) of lithium contained in the first lithium-containing raw material becomes 1:0.95 to 1:1.02, and in step (C), the second lithium-containing raw material may be mixed so that the ratio (M:Li) of the total number of moles (M) of the transition metals contained in the positive electrode active material precursor of step (A) and the number of moles (Li) of lithium included in the second lithium-containing raw material becomes 1:0.01 to 1:1.10.

When the lithium-containing raw material is injected at one time, the positive electrode active material according to the present invention may be prepared, for example, by primarily sintering the mixture prepared in step (A) at 820 °C to 950 °C, then immediately dropping the temperature to 700 °C to 850 °C (not dropping to room temperature), and secondarily sintering the mixture at 700 °C to 850 °C to obtain a secondarily sintered product, and pulverizing the secondarily sintered product at room temperature so that the average particle diameter (D₅₀) is 2.5 um to 5.5 um. In this case, in step (A), the first lithium-containing raw material may be mixed so that the ratio (M:Li) of the total number of moles (M) of the transition metals contained in the positive electrode active material precursor and the number of moles (Li) of lithium contained in the first lithium-containing raw material becomes 1:1.00 to 1:1.10. In addition, the primary sintering temperature may be higher than the secondary sintering temperature.

The method for preparing the positive electrode active material according to the present invention may further include a step of (D) mixing the secondarily sintered product with a cobalt-containing coating material and then performing heat-treatment. In this case, a coating part containing Co is formed on the secondarily sintered product (lithium composite transition metal oxide in the form of a single particle).

According to the present invention, when the secondarily sintered product and the cobalt-containing coating material are mixed in step (D), an aluminum-containing coating material, a zirconium-containing coating material, or a combination thereof may be further mixed. In this case, the coating part may further include Al, Zr, or a combination thereof in addition to Co.

According to the present invention, the cobalt-containing coating material may be mixed in an amount so that the ratio (B/A) of the number of moles (B) of cobalt contained in the cobalt-containing coating material to the total number of moles (A) of metals other than lithium contained in the secondarily sintered product becomes 0.01 to 0.03. In this case, there is the advantage that lithium by-products may be controlled in the positive electrode active material preparation process that does not include a washing process.

The cobalt-containing coating material may be at least one selected from Co(OH)₂, Co₃O₄, CoO, (CH₃CO₂)₂Co, CoCl₂, and CoSO4·xH₂O, and specifically, Co(OH)₂.

According to the present invention, the aluminum-containing coating material may be mixed in an amount of 0.03 parts by weight to 0.10 parts by weight with respect to 100 parts by weight of the secondarily sintered product. In this case, life, resistance, and the amount of gas generated may be improved by securing the structural stability.

The aluminum-containing coating material may be at least one selected from Al(OH)₃, Al₂(SO4)₃·xH₂O, Al₂O₃, Al(NO₃)₃·9H₂O, AlCl₃, and C₂H₅O₄Al, and specifically, Al(OH)₃.

The zirconium-containing coating material may be at least one selected from Zr(OH)₄, ZrO₂, Zr(NO₂)₄, ZrCl₄, ZrS₂, Zr(SO₄)₂, and C₈H₁₂O₈Zr.

According to the present invention, the heat-treatment may be performed in an oxygen atmosphere in order to prevent the lithium transition metal oxide from degenerating into a rock salt structure.

According to the present invention, the heat-treatment may be performed at 600°C to 800°C, specifically 650°C to 780°C, and more specifically 680 °C to 720 °C in order to form the coating part in an appropriate thickness.

According to the present invention, the heat-treatment may be performed for 1 hours to 10 hours, specifically 2 hours to 8 hours, and more specifically 3 hours to 6 hours in order to increase the crystallinity of the coating part.

### Positive Electrode

The present invention provides a positive electrode including the above positive electrode active material.

The positive electrode may include a positive electrode active material layer formed on a positive electrode current collector, and the positive electrode active material layer includes the positive electrode active material.

The positive electrode current collector may include a metal having high conductivity, and is not particularly limited as long as the positive electrode active material layer easily adheres thereto and there is no reactivity in the voltage range of the battery. For example, stainless steel, aluminum, nickel, titanium, fired carbon, or aluminum or stainless steel that is surface-treated with one of carbon, nickel, titanium, silver, or the like may be used as the positive electrode current collector. Also, the positive electrode current collector may typically have a thickness of 3 um to 500 µm, and microscopic irregularities may be formed on the surface of the current collector to improve the adhesion of the positive electrode active material. The positive electrode current collector, for example, may be used in various shapes such as a film, a sheet, a foil, a net, a porous body, a foam body, and a non-woven fabric body.

The positive electrode active material layer may optionally include a conductive agent and a binder together with the positive electrode active material as necessary. In this case, the positive electrode active material may be included in a content of 80-99 wt%, more specifically 85-98.5 wt%, with respect to the total weight of the positive electrode active material layer, and may exhibit excellent capacity characteristics within this range.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metals such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 15 wt% with respect to the total weight of the positive electrode active material layer.

The binder serves to improve binding between positive electrode active material particles and the adhesion between the positive electrode active material and the current collector. Specific examples of the binder may be polyvinylidene fluoride (PVDF), polyvinylidene fluoridehexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with Li, Na, or Ca, or various copolymers thereof, and any one thereof or a mixture of two or more thereof may be used. The binder may be included in an amount of 0.1 wt% to 15 wt% with respect to the total weight of the positive electrode active material layer.

The positive electrode may be prepared according to a typical method for preparing a positive electrode except that the above-described positive electrode active material is used. Specifically, the positive electrode may be prepared by coating a positive electrode current collector with a composition for forming a positive electrode active material layer, the composition being prepared by dissolving or dispersing the above-described positive electrode active material, and optionally the binder and the conductive agent as well as a dispersant, as necessary, in a solvent, and then drying and rolling the coated positive electrode current collector, or may be prepared by casting the composition for forming a positive electrode active material layer on a separate support and then laminating a film separated from the support on the positive electrode current collector.

The solvent may be a solvent normally used in the art. The solvent may include dimethyl sulfoxide (DMSO), isopropyl alcohol, N-methylpyrrolidone (NMP), dimethylformamide (DMF), acetone, or water, and any one thereof or a mixture of two or more thereof may be used. An amount of the solvent used may be sufficient if the solvent may dissolve or disperse the positive electrode active material, the conductive agent, the binder, and the dispersing agent in consideration of a coating thickness of the slurry and manufacturing yield, and may allow to have a viscosity that may provide excellent thickness uniformity during the subsequent coating for the preparation of the positive electrode.

### LITHIUM SECONDARY BATTERY

The present invention provides a lithium secondary battery including: the positive electrode; a negative electrode; a separator interposed between the positive electrode and the negative electrode; and an electrolyte.

The lithium secondary battery may further optionally include a battery container accommodating an electrode assembly of the positive electrode, the negative electrode, and the separator, and a sealing member which seals the battery container.

The negative electrode may include a negative electrode current collector and a negative electrode active material layer disposed on the negative electrode current collector.

The negative electrode current collector is not particularly limited as long as it has high conductivity without causing adverse chemical changes in the battery, and, for example, copper, stainless steel, aluminum, nickel, titanium, sintered carbon, copper or stainless steel that is surface-treated with one of carbon, nickel, titanium, silver, or the like, and an aluminum-cadmium alloy or the like may be used. Also, the negative electrode current collector may typically have a thickness of 3 um to 500 µm, and, similar to the positive electrode current collector, microscopic irregularities may be formed on the surface of the current collector to improve the binding force of the negative electrode active material. For example, the negative electrode current collector may be used in various forms such as a film, a sheet, a foil, a net, a porous body, a foam, and a non-woven fabric body.

The negative electrode active material layer includes optionally a binder and a conductive agent together with the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiOp(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may include soft carbon and hard carbon, and typical examples of the high crystalline carbon may include irregular, planar, flaky, spherical, or fibrous natural graphite or artificial graphite, Kish graphite, pyrolytic carbon, mesophase pitch-based carbon fibers, mesocarbon microbeads, mesophase pitches, and high-temperature sintered carbon such as petroleum or coal tar pitch derived cokes. The negative electrode active material may be included in an amount of 80 wt% to 99 wt% based on the total weight of the negative electrode active material layer.

The binder of the negative electrode active material layer is a component that assists in the binding between the conductive agent, the active material, and the current collector, wherein the binder is commonly added in an amount of 0.1 wt% to 10 wt% based on the total weight of the negative electrode active material layer. Examples of the binder may include a polyvinylidene fluoride (PVDF), a polyvinyl alcohol, carboxymethylcellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber, a nitrile-butadiene rubber, a fluoro rubber, various copolymers thereof, and the like.

The conductive agent of the negative electrode active material layer is a component for further improving conductivity of the negative electrode active material, wherein the conductive agent may be added in an amount of 10 wt% or less, preferably, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder and nickel powder; conductive whiskers such as zinc oxide whiskers and potassium titanate whiskers; conductive metal oxide such as titanium oxide; or polyphenylene derivatives may be used.

The negative electrode active material layer may be prepared by coating a negative electrode current collector with a composition for forming a negative electrode active material layer, the composition being prepared by dissolving or dispersing the negative electrode active material, and optionally the binder and the conductive agent as well as the negative electrode active material in a solvent, and drying the coated negative electrode current collector, or may be prepared by casting the composition for forming a negative electrode active material layer on a separate support and then laminating a film separated from the support on the negative electrode current collector.

The separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte solution as well as low resistance to the transfer of electrolyte ions is preferred. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but is not limited thereto. Specifically, the electrolyte may include an organic solvent and a lithium salt.

Any organic solvent may be used without particular limitation as long as it may serve as a medium through which ions involved in an electrochemical reaction of a battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, anions of the lithium salt may be at least one selected from the group consisting of F-, Cl⁻, Br⁻, I-, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN-, and (CF₃CF₂SO₂)₂N⁻, and as the lithium salt, LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. It is preferable to use the lithium salt in a concentration range of 0.1 M to 2.0 M. When the concentration of the lithium salt is included within the above range, the electrolyte may have suitable conductivity and viscosity, thereby exhibiting excellent performance, and lithium ions may effectively migrate.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, *N*-substituted oxazolidinone, *N*,*N-*substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 5 wt% with respect to the total weight of the electrolyte.

The lithium secondary battery including the positive electrode active material according to the present invention exhibits excellent initial efficiency, resistance characteristics, and life characteristics, and is thus useful for portable devices such as a mobile phone, a notebook computer, and a digital camera, and in the field of electric cars such as a hybrid electric vehicle (HEV) and electric vehicle (EV).

A shape of the lithium secondary battery of the present invention is not particularly limited, but a cylindrical type using a can, a prismatic type, a pouch type, a coin type, or the like may be used.

The lithium secondary battery according to the present invention may not only be used in a battery cell that is used as a power source of a small device, but may also be used as a unit cell in a medium and large sized battery module including a plurality of battery cells.

Thus, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle (HEV), and a plug-in hybrid electric vehicle (PHEV); or a power storage system.

### MODE FOR CARRYING OUT THE INVENTION

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Examples and Comparative Example

### Example 1

A composite transition metal hydroxide (composition: Ni_{0.885}Co_{0.035}Mn_{0.0} (OH)₂, average particle diameter (D₅₀) : 4.19 µm) in the form of a secondary particle formed by the aggregation of tens to hundreds of primary particles, and LiOH were mixed so that the ratio ((Ni+Co+Mn) :Li) of the total number of moles (Ni+Co+Mn) of transition metals contained in the composite transition metal hydroxide to the number of moles (Li) of lithium contained in LiOH became 1:0.98, and Al(OH)₃ (Daejoo KC) was added thereto in an amount of 1,400 ppm with respect to the total weight of the composite transition metal hydroxide, Y₂O₃ (Neo Performance Materials) in an amount of 1,000 ppm, and ZrO₂ (R&F chemical) in an amount of 1,500 ppm and mixed to prepare a mixture.

The mixture was primarily sintered at 830 °C for 6 hours to obtain a primarily sintered product, and the primarily sintered product was pulverized at room temperature so that the average particle diameter (D₅₀) became 3.8 pm.

The pulverized primarily sintered product and LiOH were mixed so that the ratio (Ni+Co+Mn):Li) of the total number of moles (Ni+Co+Mn) of the transition metals contained in the composite transition metal hydroxide to the number of moles (Li) of lithium contained in LiOH became 1:0.04, then secondarily sintered at 760 °C for 9 hours to obtain a secondarily sintered product, and the secondarily sintered product was pulverized at room temperature to obtain a lithium composite transition metal oxide in the form of a single particle (composition: LiNi_{0.87836}CO_{0.03493}Mn_{0.07985}Al_{0.00499}Y_{0.00027}Zr_{0.0016}O₂) having an average particle diameter (D₅₀) of 3.8 pm.

The lithium composite transition metal oxide in the form of a single particle was uniformly mixed with Co(OH)₂ (Huayou Cobalt Co., Ltd.) and Al(OH)₃ (Daejoo KC), and the mixture was then heat-treated in an oxygen atmosphere at 700 °C for 5 hours to prepare a positive electrode active material (composition: LiNi_{0.85761}Co_{0.05489}Mn_{0.07978}Al_{0.00586}Y_{0.00027}Zr_{0.00159}O₂) having a coating part including Co and Al formed on the lithium composite transition metal oxide in the form of a single particle. In this case, the Co(OH)₂ was mixed in an amount so that the ratio (B/A) of the number of moles (B) of cobalt contained in the cobalt-containing coating material to the total number of moles (A) of metals other than lithium contained in the lithium composite transition metal oxide in the form of a single particle became 0.02, and the Al(OH)₃ was mixed in an amount of 0.05 parts by weight with respect to 100 parts by weight of the lithium composite transition metal oxide in the form of a single particle.

### Example 2

A composite transition metal hydroxide (composition: Ni_{0.885}Co_{0.035}Mn_{0.08}(OH)₂, average particle diameter (D₅₀) : 4.19 µm) in the form of a secondary particle formed by the aggregation of tens to hundreds of primary particles, and LiOH were mixed so that the ratio ((Ni+Co+Mn) :Li) of the total number of moles (Ni+Co+Mn) of transition metals contained in the composite transition metal hydroxide to the number of moles (Li) of lithium contained in LiOH became 1:0.98, and Al(OH)₃ (Daejoo KC) was added thereto in an amount of 1,400 ppm with respect to the total weight of the composite transition metal hydroxide, Y₂O₃ (Neo Performance Materials) in an amount of 2,000 ppm, and ZrO₂ (R&F chemical) in an amount of 1,500 ppm and mixed to prepare a mixture.

The mixture was primarily sintered at 830 °C for 6 hours to obtain a primarily sintered product, and the primarily sintered product was pulverized at room temperature so that the average particle diameter (D₅₀) became 3.8 pm.

The pulverized primarily sintered product and LiOH were mixed so that the ratio (Ni+Co+Mn):Li) of the total number of moles (Ni+Co+Mn) of the transition metals contained in the composite transition metal hydroxide to the number of moles (Li) of lithium contained in LiOH became 1:0.04, then secondarily sintered at 760 °C for 9 hours to obtain a secondarily sintered product, and the secondarily sintered product was pulverized at room temperature to obtain a lithium composite transition metal oxide in the form of a single particle (composition: LiNi_{0.87813}Co_{0.03492}Mn_{0.07983}Al_{0.00499}Y_{0.00054}Zr_{0.00159}O₂) having an average particle diameter (D₅₀) of 3.8 pm.

The lithium composite transition metal oxide in the form of a single particle was uniformly mixed with Co(OH)₂ (Huayou Cobalt Co., Ltd.) and Al(OH)₃ (Daejoo KC), and the mixture was then heat-treated in an oxygen atmosphere at 700 °C for 5 hours to prepare a positive electrode active material (composition: LiNi_{0.85738}Co_{0.05487}Mn_{0.07976}Al_{0.00586}Y_{0.00054}Zr_{0.00159}O₂) having a coating part including Co and Al formed on the lithium composite transition metal oxide in the form of a single particle. In this case, the Co(OH)₂ was mixed in an amount so that the ratio (B/A) of the number of moles (B) of cobalt contained in the cobalt-containing coating material to the total number of moles (A) of metals other than lithium contained in the lithium composite transition metal oxide in the form of a single particle became 0.02, and the Al(OH)₃ was mixed in an amount of 0.05 parts by weight with respect to 100 parts by weight of the lithium composite transition metal oxide in the form of a single particle.

### Example 3

A composite transition metal hydroxide (composition: Ni_{0.885}Co_{0.035}Mn_{0.08}(OH)₂, average particle diameter (D₅₀) : 4.19 µm) in the form of a secondary particle formed by the aggregation of tens to hundreds of primary particles, and LiOH were mixed so that the ratio ((Ni+Co+Mn) :Li) of the total number of moles (Ni+Co+Mn) of transition metals contained in the composite transition metal hydroxide to the number of moles (Li) of lithium contained in LiOH became 1:0.98, and Al(OH)₃ (Daejoo KC) was added thereto in an amount of 2,800 ppm with respect to the total weight of the composite transition metal hydroxide, Y₂O₃ (Neo Performance Materials) in an amount of 1,000 ppm, and ZrO₂ (R&F chemical) in an amount of 1,500 ppm and mixed to prepare a mixture.

The mixture was primarily sintered at 830 °C for 6 hours to obtain a primarily sintered product, and the primarily sintered product was pulverized at room temperature so that the average particle diameter (D₅₀) became 3.8 pm.

The pulverized primarily sintered product and LiOH were mixed so that the ratio (Ni+Co+Mn):Li) of the total number of moles (Ni+Co+Mn) of the transition metals contained in the composite transition metal hydroxide to the number of moles (Li) of lithium contained in LiOH became 1:0.04, then secondarily sintered at 760 °C for 9 hours to obtain a secondarily sintered product, and the secondarily sintered product was pulverized at room temperature to obtain a lithium composite transition metal oxide in the form of a single particle (composition: LiNi_{0.87338}Co_{0.03493}Mn_{0.07985}Al_{0.00998}Y_{0.00027}Zr_{0.00159}O₂) having an average particle diameter (D₅₀) of 3.8 pm.

The lithium composite transition metal oxide in the form of a single particle was uniformly mixed with Co(OH)₂ (Huayou Cobalt Co., Ltd.) and Al(OH)₃ (Daejoo KC), and the mixture was then heat-treated in an oxygen atmosphere at 700 °C for 5 hours to prepare a positive electrode active material (composition: LiNi_{0.85262}Co_{0.05489}Mn_{0.07978}Al_{0.01085}Y_{0.00027}Zr_{0.00159}O₂) having a coating part including Co and Al formed on the lithium composite transition metal oxide in the form of a single particle. In this case, the Co(OH)₂ was mixed in an amount so that the ratio (B/A) of the number of moles (B) of cobalt contained in the cobalt-containing coating material to the total number of moles (A) of metals other than lithium contained in the lithium composite transition metal oxide in the form of a single particle became 0.02, and the Al(OH)₃ was mixed in an amount of 0.05 parts by weight with respect to 100 parts by weight of the lithium composite transition metal oxide in the form of a single particle.

### Example 4

A composite transition metal hydroxide (composition: Ni_{0.885}Co_{0.035}Mn_{0.08}(OH)₂, average particle diameter (D₅₀) : 4.19 µm) in the form of a secondary particle formed by the aggregation of tens to hundreds of primary particles, and LiOH were mixed so that the ratio ((Ni+Co+Mn) :Li) of the total number of moles (Ni+Co+Mn) of transition metals contained in the composite transition metal hydroxide to the number of moles (Li) of lithium contained in LiOH became 1:0.98, and Al(OH)₃ (Daejoo KC) was added thereto in an amount of 1,400 ppm with respect to the total weight of the composite transition metal hydroxide, Y₂O₃ (Neo Performance Materials) in an amount of 1,000 ppm, and ZrO₂ (R&F chemical) in an amount of 3,500 ppm and mixed to prepare a mixture.

The mixture was primarily sintered at 830 °C for 6 hours to obtain a primarily sintered product, and the primarily sintered product was pulverized at room temperature so that the average particle diameter (D₅₀) became 3.8 pm.

The pulverized primarily sintered product and LiOH were mixed so that the ratio (Ni+Co+Mn):Li) of the total number of moles (Ni+Co+Mn) of the transition metals contained in the composite transition metal hydroxide to the number of moles (Li) of lithium contained in LiOH became 1:0.04, then secondarily sintered at 760 °C for 9 hours to obtain a secondarily sintered product, and the secondarily sintered product was pulverized at room temperature to obtain a lithium composite transition metal oxide in the form of a single particle (composition: LiNi_{0.87651}Co_{0.03486}Mn_{0.07968}Al_{0.00498}Y_{0.00027}Zr_{0.0037}O₂) having an average particle diameter (D₅₀) of 3.8 pm.

The lithium composite transition metal oxide in the form of a single particle was uniformly mixed with Co(OH)₂ (Huayou Cobalt Co., Ltd.) and Al(OH)₃ (Daejoo KC), and the mixture was then heat-treated in an oxygen atmosphere at 700 °C for 5 hours to prepare a positive electrode active material (composition: LiNi_{0.85576}Co_{0.05481}Mn_{0.07961}Al_{0.00585}Y_{0.00027}Zr_{0.0037}O₂) having a coating part including Co and Al formed on the lithium composite transition metal oxide in the form of a single particle. In this case, the Co(OH)₂ was mixed in an amount so that the ratio (B/A) of the number of moles (B) of cobalt contained in the cobalt-containing coating material to the total number of moles (A) of metals other than lithium contained in the lithium composite transition metal oxide in the form of a single particle became 0.02, and the Al(OH)₃ was mixed in an amount of 0.05 parts by weight with respect to 100 parts by weight of the lithium composite transition metal oxide in the form of a single particle.

### Comparative Example 1

A composite transition metal hydroxide (composition: Ni_{0.885}Co_{0.035}Mn_{0.08} (OH)₂, average particle diameter (D₅₀) : 4.19 µm) in the form of a secondary particle formed by the aggregation of tens to hundreds of primary particles, and LiOH were mixed so that the ratio ((Ni+Co+Mn) :Li) of the total number of moles (Ni+Co+Mn) of transition metals contained in the composite transition metal hydroxide to the number of moles (Li) of lithium contained in LiOH became 1:0.98, and Al(OH)₃ (Daejoo KC) was added thereto in an amount of 1,400 ppm with respect to the total weight of the composite transition metal hydroxide, and ZrO₂ (R&F chemical) in an amount of 1,500 ppm and mixed to prepare a mixture.

The mixture was primarily sintered at 830 °C for 6 hours to obtain a primarily sintered product, and the primarily sintered product was pulverized at room temperature so that the average particle diameter (D₅₀) became 3.8 pm.

The pulverized primarily sintered product and LiOH were mixed so that the ratio (Ni+Co+Mn):Li) of the total number of moles (Ni+Co+Mn) of the transition metals contained in the composite transition metal hydroxide to the number of moles (Li) of lithium contained in LiOH became 1:0.04, then secondarily sintered at 760 °C for 9 hours to obtain a secondarily sintered product, and the secondarily sintered product was pulverized at room temperature to obtain a lithium composite transition metal oxide in the form of a single particle (composition: LiNi_{0.8786}Co_{0.03494}Mn₀.₀₇₉₈₇Al_{0.00499}Zr_{0.0016}O₂) having an average particle diameter (D₅₀) of 3.8 pm.

The lithium composite transition metal oxide in the form of a single particle was uniformly mixed with Co(OH)₂ (Huayou Cobalt Co., Ltd.) and Al(OH)₃ (Daejoo KC), and the mixture was then heat-treated in an oxygen atmosphere at 700 °C for 5 hours to prepare a positive electrode active material (composition: LiNi_{0.85784}Co_{0.0549}Mn_{0.0798}Al_{0.00586}Zr_{0.0016}O₂) having a coating part including Co and Al formed on the lithium composite transition metal oxide in the form of a single particle. In this case, the Co(OH)₂ was mixed in an amount so that the ratio (B/A) of the number of moles (B) of cobalt contained in the cobalt-containing coating material to the total number of moles (A) of metals other than lithium contained in the lithium composite transition metal oxide in the form of a single particle became 0.02, and the Al(OH)₃ was mixed in an amount of 0.05 parts by weight with respect to 100 parts by weight of the lithium composite transition metal oxide in the form of a single particle.

### Comparative Example 2

A composite transition metal hydroxide (composition: Ni_{0.885}Co_{0.035}Mn_{0.08} (OH)₂, average particle diameter (D₅₀) : 4.19 µm) in the form of a secondary particle formed by the aggregation of tens to hundreds of primary particles, and LiOH were mixed so that the ratio ((Ni+Co+Mn) :Li) of the total number of moles (Ni+Co+Mn) of transition metals contained in the composite transition metal hydroxide to the number of moles (Li) of lithium contained in LiOH became 1:0.98, and Y₂O₃ (Neo Performance Materials) was added thereto in an amount of 1,000 ppm with respect to the total weight of the composite transition metal hydroxide, and ZrO₂ (R&F chemical) in an amount of 1,500 ppm and mixed to prepare a mixture.

The mixture was primarily sintered at 830 °C for 6 hours to obtain a primarily sintered product, and the primarily sintered product was pulverized at room temperature so that the average particle diameter (D₅₀) became 3.8 pm.

The pulverized primarily sintered product and LiOH were mixed so that the ratio (Ni+Co+Mn):Li) of the total number of moles (Ni+Co+Mn) of the transition metals contained in the composite transition metal hydroxide to the number of moles (Li) of lithium contained in LiOH became 1:0.04, then secondarily sintered at 760 °C for 9 hours to obtain a secondarily sintered product, and the secondarily sintered product was pulverized at room temperature to obtain a lithium composite transition metal oxide in the form of a single particle (composition: LiNi_{0.88336}Co_{0.03493}Mn_{0.07985}Y_{0.00027}Zr_{0.00159}O₂) having an average particle diameter (D₅₀) of 3.8 pm.

The lithium composite transition metal oxide in the form of a single particle was uniformly mixed with Co(OH)₂ (Huayou Cobalt Co., Ltd.) and Al(OH)₃ (Daejoo KC), and the mixture was then heat-treated in an oxygen atmosphere at 700 °C for 5 hours to prepare a positive electrode active material (composition: LiNi_{0.86259}Co_{0.05489}Mn_{0.07978}Al_{0.00088}Y_{0.00027}Zr_{0.00159}O₂) having a coating part including Co and Al formed on the lithium composite transition metal oxide in the form of a single particle. In this case, the Co(OH)₂ was mixed in an amount so that the ratio (B/A) of the number of moles (B) of cobalt contained in the cobalt-containing coating material to the total number of moles (A) of metals other than lithium contained in the lithium composite transition metal oxide in the form of a single particle became 0.02, and the Al(OH)₃ was mixed in an amount of 0.05 parts by weight with respect to 100 parts by weight of the lithium composite transition metal oxide in the form of a single particle.

### Comparative Example 3

A composite transition metal hydroxide (composition: Ni_{0.885}Co_{0.035}Mn_{0.08} (OH)₂, average particle diameter (D₅₀) : 4.19 µm) in the form of a secondary particle formed by the aggregation of tens to hundreds of primary particles, and LiOH were mixed so that the ratio ((Ni+Co+Mn) :Li) of the total number of moles (Ni+Co+Mn) of transition metals contained in the composite transition metal hydroxide to the number of moles (Li) of lithium contained in LiOH became 1:0.98, and Al(OH)₃ (Daejoo KC) was added thereto in an amount of 1,400 ppm with respect to the total weight of the composite transition metal hydroxide, and Y₂O₃ (Neo Performance Materials) in an amount of 1,000 ppm and mixed to prepare a mixture.

The mixture was primarily sintered at 830 °C for 6 hours to obtain a primarily sintered product, and the primarily sintered product was pulverized at room temperature so that the average particle diameter (D₅₀) became 3.8 pm.

The pulverized primarily sintered product and LiOH were mixed so that the ratio (Ni+Co+Mn):Li) of the total number of moles (Ni+Co+Mn) of the transition metals contained in the composite transition metal hydroxide to the number of moles (Li) of lithium contained in LiOH became 1:0.04, then secondarily sintered at 760 °C for 9 hours to obtain a secondarily sintered product, and the secondarily sintered product was pulverized at room temperature to obtain a lithium composite transition metal oxide in the form of a single particle (composition: LiNi_{0.87976}Co_{0.03499}Mn_{0.07998}Al_{0.005}Y_{0.00027}O₂) having an average particle diameter (D₅₀) of 3.8 pm.

The lithium composite transition metal oxide in the form of a single particle was uniformly mixed with Co(OH)₂ (Huayou Cobalt Co., Ltd.) and Al(OH)₃ (Daejoo KC), and the mixture was then heat-treated in an oxygen atmosphere at 700 °C for 5 hours to prepare a positive electrode active material (composition: LiNi_{0.85901}Co_{0.05494}Mn_{0.07991}Al_{0.00587}Y_{0.00027}O₂) having a coating part including Co and Al formed on the lithium composite transition metal oxide in the form of a single particle. In this case, the Co(OH)₂ was mixed in an amount so that the ratio (B/A) of the number of moles (B) of cobalt contained in the cobalt-containing coating material to the total number of moles (A) of metals other than lithium contained in the lithium composite transition metal oxide in the form of a single particle became 0.02, and the Al(OH)₃ was mixed in an amount of 0.05 parts by weight with respect to 100 parts by weight of the lithium composite transition metal oxide in the form of a single particle.

### Experimental Examples

### Experimental Example 1: Analysis of Positive Electrode Active Material

In order to confirm in what state Al, Y, and Zr, which are dopants, are present in the positive electrode active material prepared in Example 1, and in what form a coating layer including Co and Al is formed, the positive electrode active material was analyzed using a transmission electron microscope (TEM) (Titan Buved G2 600-300) EDX-Mapping, and TEM EDX-Mapping data is shown in FIG. 1.

Referring to FIG. 1, in the case of the positive electrode active material prepared in Example 1, it may be confirmed that Al, Y, and Zr, which are dopants, do not have concentration gradients in the particles and are uniformly distributed, and it may be confirmed that the coating part including Co and Al is formed in the form of a thin film on the surface of the particles.

### Experimental Example 2: Confirmation of Amount of Residual Lithium Present in Secondarily Sintered Product

The amount of residual lithium present in each of the secondarily sintered products prepared in Examples 1 to 4 and Comparative Examples 1 to 3, that is, the amounts of Li₂CO₃ and LiOH were confirmed by the following method.

Specifically, 5 g of each of the secondarily sintered products prepared in Examples 1 to 4 and Comparative Examples 1 to 3 was added to 100 g of distilled water and mixed for 5 minutes, followed by filtering. After filtering, the amounts of Li₂CO₃ and LiOH dissolved in distilled water were measured by titration (using 0.1N HCl) using a pH meter, and the measured amounts are shown in Table 1.

**[Table 1]**

| | Li₂CO₃ (wt%) | LiOH (wt%) | Total (wt%) |
|---|---|---|---|
| Example 1 | 0.237 | 0.459 | 0.696 |
| Example 2 | 0.180 | 0.458 | 0.638 |
| Example 3 | 0.185 | 0.465 | 0.650 |
| Example 4 | 0.357 | 0.441 | 0.798 |
| Comparative Example 1 | 0.318 | 0.452 | 0.770 |
| Comparative Example 2 | 0.332 | 0.412 | 0.744 |
| Comparative Example 3 | 0.237 | 0.442 | 0.679 |

### Experimental Example 3: Evaluation of Battery Characteristics

Each of the positive electrode active materials prepared in Examples 1 to 4 and Comparative Examples 1 to 3, carbon black as a conductive agent, and polyvinylidene fluoride (PVDF) as a binder were mixed in a ratio of 96:2:2 in an N-methylpyrrolidone (NMP) solvent to prepare a positive electrode slurry. The positive electrode slurry was coated on one surface of an aluminum current collector, dried at 150 °C, and then rolled to prepare a positive electrode.

A lithium metal electrode was used as a negative electrode, a porous polyethylene separator was interposed between the positive electrode and the negative electrode to prepare an electrode assembly, the electrode assembly was positioned inside a battery case, and an electrolyte solution was injected into the case, thereby manufacturing a half-cell. In this case, as the above electrolyte solution, an electrolyte solution, in which LiPF₆ was dissolved in 1.0 M in a mixed organic solvent of ethylene carbonate (EC): ethyl methyl carbonate (EMC): diethyl carbonate (DEC) at a volume ratio of 3:4:3, was used.

For each of the half-cells manufactured as described above, the initial charge capacity and the initial discharge capacity were measured while charging it at 25 °C under a CC-CV mode at 0.1 C until it reached 4.3 V and discharging it at a constant current of 0.1 C until it reached 3.0 V, and the initial efficiency and the direct current internal resistance (DCIR) were calculated, and the results are shown in Table 2 below. For reference, the initial efficiency value is a percentage value of the initial discharge capacity to the initial charge capacity, and the DCIR value is a value calculated by dividing, by the applied current, the difference between the voltage at 60 seconds during the discharging at a constant current of 0.1C and the initial.

In addition, capacity of the lithium secondary battery was measured by repeating a charge and discharge cycle 50 times at a constant current of 0.33 C in a voltage range of 3.0 V to 4.25 V at 45°C, and a percentage of 50th cycle discharge capacity to 1st cycle discharge capacity was defined as a capacity retention and the capacity retentions are presented in Table 2 below. Also, a percentage of DCIR, which was obtained by dividing a voltage drop (ΔV) for 60 seconds in the 50th discharge cycle by the current, to DCIR, which was obtained by dividing a voltage drop (ΔV) for 60 seconds in the 1st discharge cycle by the current, was defined as a resistance increase rate, and the resistance increase rates are presented in Table 2 below.

**[Table 2]**

| | Initial charge capacity (mAh/g) | Initial discharge capacity (mAh/g) | Initial efficienc y (%) | DCIR (Q) | Capacity retention (%) | Resistanc e increase rate (%) |
|---|---|---|---|---|---|---|
| Example 1 | 229.5 | 203.4 | 88.6 | 16.3 | 92.9 | 32.3 |
| Example 2 | 230.7 | 204.8 | 88.7 | 16.2 | 92.3 | 40.1 |
| Example 3 | 229.8 | 204.5 | 89.0 | 15.9 | 92.2 | 38.9 |
| Example 4 | 227.1 | 201.7 | 88.8 | 14.7 | 93.1 | 31.6 |
| Comparative Example 1 | 227.5 | 200.2 | 88.0 | 16.2 | 91.9 | 38.9 |
| Comparative Example 2 | 228.6 | 201.9 | 88.3 | 15.7 | 91.1 | 34.7 |
| Comparative Example 3 | 229.7 | 204.4 | 89.0 | 16.6 | 92.2 | 40.4 |

Referring to Table 2, it may be confirmed that the batteries including the positive electrode active materials of Examples 1 to 4 have high initial efficiency and capacity retention, and low initial resistance and resistance increase rate.

On the other hand, since the positive electrode active material of Comparative Example 1 does not include Y, there is a problem in the growth of the grain, and it may be confirmed that the initial efficiency and capacity retention characteristics of the battery including the positive electrode active material of Comparative Example 1 are deteriorated. In addition, since the positive electrode active material of Comparative Example 2 does not include Al and thus has a high defect and has increased cation mixing, it may be confirmed that the initial efficiency and capacity retention characteristics of the battery including the positive electrode active material of Comparative Example 2 are deteriorated. Also, since the positive electrode active material of Comparative Example 3 does not include Zr that maintains the structural stability, it may be confirmed that the initial resistance and resistance increase rate are high.

## Claims

1. A positive electrode active material comprising a lithium composite transition metal oxide in a form of a single particle, wherein the lithium composite transition metal oxide includes Al, Y, and Zr.

2. The positive electrode active material of claim 1, wherein the lithium composite transition metal oxide has an average particle diameter (D₅₀) of 2.5 um to 5.5 um.

3. The positive electrode active material of claim 1, wherein the Al is included in an amount of 500 ppm to 3,000 ppm with respect to a total weight of the lithium composite transition metal oxide.

4. The positive electrode active material of claim 1, wherein the Y is included in an amount of 100 ppm to 2,000 ppm with respect to a total weight of the lithium composite transition metal oxide.

5. The positive electrode active material of claim 1, wherein the Zr is included in an amount of 500 ppm to 5,000 ppm with respect to a total weight of the lithium composite transition metal oxide.

6. The positive electrode active material of claim 1, wherein the lithium composite transition oxide metal contains 60 mol% or more of nickel with respect to a total number of moles of metals other than lithium.

7. The positive electrode active material of claim 1, wherein the lithium composite transition metal oxide has a composition represented by Formula 1 below:
[Formula 1] Liₓ[NiₐCo_{b}Mn_{c}Al_{d}YₑZr_{f}M1_{g}]O_{2-y}A_{y}
wherein, in Formula 1 above,
M1 is at least one selected from among B, Ti, W, Nb, Sr, Mo, Mg, P, V, Ta, Ga, and Ca,
A is at least one selected from among F, Cl, Br, I, and S, and
0.9≤x≤1.2, 0.6≤a<1, 0≤b≤0.4, 0≤c≤0.4, 0<d≤0.01, 0<e≤0.0006, 0<f≤0.005, 0≤g≤0.2, a+b+c+d+e+f+g=1, and 0≤y≤0.2.

8. The positive electrode active material of claim 1, further comprising a coating part containing Co formed on the lithium composite transition metal oxide in the form of a single particle.

9. The positive electrode active material of claim 8, wherein the coating part further comprises Al, Zr, or a combination thereof.

10. A method for preparing the positive electrode active material according to claim 1, the method comprising the steps of:
(A) mixing a positive electrode active material precursor including a composite transition metal hydroxide, a composite transition metal oxyhydroxide, or a combination thereof,a first lithium-containing raw material, an aluminum-containing raw material, an yttrium-containing raw material, and a zirconium-containing raw material to prepare a mixture;
(B) primarily sintering the mixture at 820 °C to 950 °C to prepare a primarily sintered product; and
(C) mixing the primarily sintered product with optionally a second lithium-containing raw material, and then secondarily sintering the mixture at 700 °C to 850 °C to prepare a secondarily sintered product.

11. The method of claim 10, further comprising a step of (B') pulverizing the primarily sintered product before step (C) .

12. The method of claim 10, further comprising a step of (C') pulverizing the secondarily sintered product.

13. The method of claim 10, further comprising a step of (D) mixing the secondarily sintered product with a cobalt-containing coating material, and then performing heat-treatment.

14. The method of claim 13, wherein in step (D), when the secondarily sintered product and the cobalt-containing coating material are mixed, an aluminum-containing coating material, a zirconium-containing coating material, or a combination thereof is further mixed.

15. The method of claim 13, wherein the cobalt-containing coating material is mixed in an amount so that the ratio (B/A) of the number of moles (B) of cobalt contained in the cobalt-containing coating material to the total number of moles (A) of metals other than lithium contained in the secondarily sintered product becomes 0.01 to 0.03.

16. The method of claim 14, wherein the aluminum-containing coating material is mixed in an amount of 0.03 parts by weight to 0.10 parts by weight with respect to 100 parts by weight of the secondarily sintered product.

17. The method of claim 13, wherein the heat-treatment is performed in an oxygen atmosphere.

18. The method of claim 13, wherein the heat-treatment is performed at 600 °C to 800 °C.

19. A positive electrode comprising the positive electrode active material according to any one of claims 1 to 9.

20. A lithium secondary battery comprising:
the positive electrode according to claim 19;
a negative electrode;
a separator interposed between the positive electrode and the negative electrode; and
an electrolyte.
